(19) Europäisches Patentamt

European Patent Office

Office européen des brevets

(11) **EP 1 798 667 A2**

(12) **EUROPEAN PATENT APPLICATION**

(43) Date of publication:
**20.06.2007 Bulletin 2007/25**

(51) Int Cl.:
***G06K 9/20*** (2006.01)　　***G08G 1/00*** (2006.01)
***E01F 9/00*** (2006.01)

(21) Application number: **06077165.6**

(22) Date of filing: **04.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.12.2005 US 300214**

(71) Applicant: **Delphi Technologies, Inc.
Troy, Michigan 48007 (US)**

(72) Inventor: **Holtz, Nevine
Saline, MI 48176 (US)**

(74) Representative: **Denton, Michael John et al
Delphi European Headquarters,
64 avenue de la Plaine de France,
Paris Nord II,
B.P. 65059, Tremblay en France
95972 Roissy Charles de Gaulle Cedex (FR)**

(54) **Polarimetric detection of road signs**

(57)　　The present invention provides an object identification system (100, 300, 400, 500, 600) including at least one processor (160); a light source (130, 131, 330, 430, 530, 630) coupled to the at least one processor and configured to emit light (122, 124, 322, 422, 522, 622) towards a retroreflective object (240) and a non-retroreflective object (210, 220); a first sensor (151, 351) coupled to the at least one processor, the first sensor configured to detect light having a first polarization orientation; and a second sensor (150, 350) coupled to the at least one processor, the second sensor configured to detect light having a second polarization orientation substantially orthogonal to the first polarization orientation.

Fig.3.

EP 1 798 667 A2

**Description**

TECHNICAL FIELD

The present invention generally relates to the detection of objects in a traffic scene and more specifically relates to the identification of road signs.

BACKGROUND OF THE INVENTION

Traffic scenes typically have a large amount of information that a driver has to process. Because drivers are faced with many distractions, they may not pay attention to road signs. Elderly drivers find it especially difficult to read and understand the posted road signs. This may result in hazardous situations that can lead to collisions. To solve this problem, auto manufacturers have used vision systems to automate road sign recognition. However, vision systems are problematic due to the complexity of traffic scenes and the constantly changing traffic environment. The use of vision systems is further complicated by the fact that there are no common standards for road signs in different countries. The signs may also differ from one region to another within the same country.

The recognition process of road signs is typically divided into two phases: the segmentation phase and the recognition phase. In the segmentation phase, the road signs are identified and separated from the rest of the traffic scene. In the recognition phase, the signs are read and classified. The classification usually involves image processing techniques such as optical character recognition ("OCR") and pattern recognition.

In many instances the segmentation phase is the bottleneck of the recognition process. The most common method used for segmentation is color segmentation. Color segmentation is problematic because color can differ depending on the time of day and illumination. Other prior art solutions have attempted to identify road signs according to their geometric shape by assuming that road signs have standard geometric shapes within a certain region. These solutions are also troublesome because road signs often are partially obstructed by other objects or rotated with respect to the camera used to obtain their images. Because traffic scenes are cluttered with many objects, geometric shape detection proves to be very complex and requires an increased computational load.

SUMMARY OF THE INVENTION

The present invention provides a system for detecting road signs that uses polarization of light to achieve road sign detection. In the present invention, an object identification system includes at least one processor; a light source coupled to the at least one processor and configured to emit light towards a retroreflective object and a non-retroreflective object; a first sensor coupled to the at least one processor, the first sensor configured to detect light having a first polarization orientation; and a second sensor coupled to the at least one processor, the second sensor configured to detect light having a second polarization orientation substantially orthogonal to the first polarization orientation.

In another form of the present invention, the object identification system includes at least one processor; a light source coupled to the at least one processor, the light source configured to emit light towards a retroreflective object and a non-retroreflective object; a sensor coupled to the at least one processor, the sensor configured to detect light reflected by the retroreflective object and light reflected by the non-retroreflective object.

In yet another form of the present invention, the object identification system includes at least one processor; a light source coupled to the at least one processor and configured to emit light towards a retroreflective object and a non-retroreflective object; a light detection device coupled to the at least one processor, the light detection device including a light splitting means configured to divide light having a first polarization orientation from light having a second polarization orientation substantially orthogonal to the first polarization orientation; and a first sensor and a second sensor coupled to the light splitting means, the first sensor configured to detect light having the first polarization orientation and the second sensor configured to detect light having the second polarization orientation.

In still another form of the present invention, the object identification system includes a light source configured to emit light towards a retroreflective object and a non-retroreflective object, the light source including polarizing means configured to polarize the emitted light in a first polarization orientation; a first sensor including a first sensor filter means configured to filter light to the first sensor having the first polarization orientation; a second sensor including a second sensor filter means configured to filter light to the second sensor having a second polarization orientation substantially orthogonal to the first polarization orientation; and at least one processor coupled to each of the light source, the first sensor and the second sensor, the at least one processor including memory storing software capable of being executed by the at least one processor to carry out the steps of instructing the first sensor to detect a first image and the second sensor to detect a second image, the first and second images having corresponding pixels that form regions when aligned; performing at least one image extraction technique to extract the regions having a predetermined phase and partial polarization; comparing the extracted regions to known characteristics of retroreflective objects; and performing at least one image processing technique to read the text on the retroreflective object.

In another form of the present invention, a method of detecting an object is provided, the method including the steps of emitting polarized light towards a retroreflective object and a non-retroreflective object; filtering light reflected by the retroreflective object and the non-retroreflective object; and detecting the reflected light having the same polarization orientation as the emitted light.

BRIEF DESCRIPTION OF THE DRAWINGS

The above-mentioned and other features of this invention, and the manner of attaining them, will become more apparent and the invention itself will be better understood by reference to the following description of embodiments of the invention taken in conjunction with the accompanying drawings, wherein:

Figure 1 is illustrative of the polarization of incident light;
Figure 2 is a perspective view of an imaging system utilizing the retroreflective property of an object;
Figure 3 is a perspective view of an embodiment of the object identification system having multiple light sources;
Figure 4 is a perspective view of an embodiment of the object identification system having one light source;
Figure 5 is a perspective view of an embodiment of the object identification system having a beam splitter;
Figure 6 is a perspective view of an embodiment of the object identification system having a liquid crystal display ("LCD");
Figure 7A is a perspective view of an embodiment of the object identification system having an image sensor and integrated polarizer;
Figure 7B is illustrative of the pixels integrated in the image sensor of Figure 7A; and
Figure 8 depicts the steps carried out by the object identification system.

Corresponding reference characters indicate corresponding parts throughout the several views. Although the drawings represent embodiments of the present invention, the drawings are not necessarily to scale and certain features may be exaggerated in order to better illustrate and explain the present invention.

DESCRIPTION OF THE PREFERRED EMBODIMENTS

The embodiments disclosed below are not intended to be exhaustive or limit the invention to the precise forms disclosed in the following detailed description. Rather, the embodiments are chosen and described so that others skilled in the art may utilize their teachings.

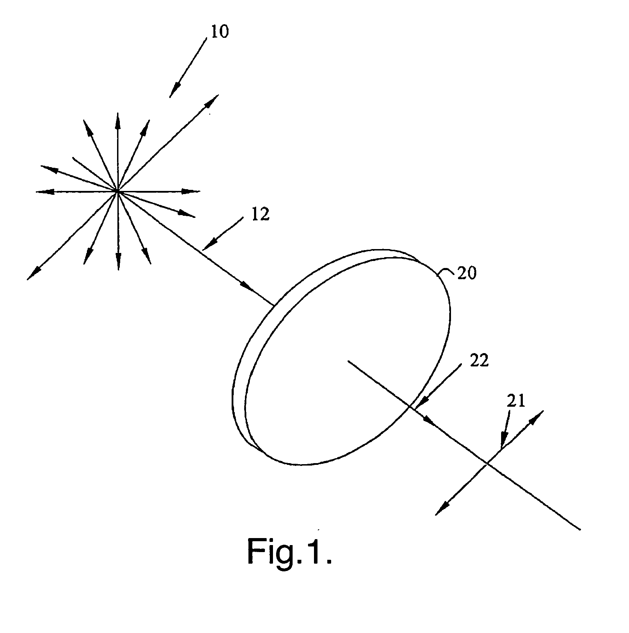

Light available in most environments is partially polarized. Shown in Fig. 1, partially polarized light consists of the superposition of unpolarized light 10 with a linearly polarized light component 12. When linear polarizer 20 is placed in the optical path of light 10, polarizer 20 transmits light component 12 polarized along the orientation 21 of polarizer 20. If polarizer 20 is rotated between zero (0) and one-hundred eighty (180) degrees, the intensity (I) of transmitted light component 22 is a sinusoid with a period of 180 degrees. The maximum intensity of the sinusoid ($I_{max}$) occurs when polarizer 20 is oriented along the direction of the linear polarized component 12 of light 10.

The polarization state of partially polarized light may be described using phase and partial polarization. The phase of the polarization is defined as the orientation of linearly polarized component 22 relative to a reference position, e.g., $I_{max}$ relative to polarizer's 20 zero (0) degree position. The partial polarization ratio provides a measure of the degree of polarization. To estimate the phase and partial polarization, three polarization orientation measurements are needed - zero (0) degrees, forty-five (45) degrees and ninety (90) degrees. Using these polarizer orientations, the phase *(theta)* and partial polarization can be calculated as follows:

$$\theta = \frac{1}{2}\tan^{-1}\left(\frac{I_0 + I_{90} - 2I_{45}}{I_{90} - I_0}\right) + 90$$

$$partial\ polarization = \frac{I_{max} - I_{min}}{I_{max} + I_{min}} = \frac{I_{90} - I_0}{(I_{90} + I_0)\cos 2(\theta - 90)}$$

In many applications, such as road sign detection, accurate estimation of the polarization state is not necessary.

When differentiating between two orthogonal polarization states, two crossed polarizer orientations of zero (0) degrees and ninety (90) degrees are sufficient. The phase and the partial polarization can be approximated by using the following equations:

$$\theta = \begin{cases} 0° & if & I_0 \geq I_{90} \\ 90° & if & I_0 < I_{90} \end{cases}$$

$$partial\ polarization = \left| \frac{I_{90} - I_0}{I_{90} + I_0} \right|$$

The use of the above equations reduces computational and hardware complexity. Accordingly, the present invention utilizes these equations in identifying objects in a traffic scene.

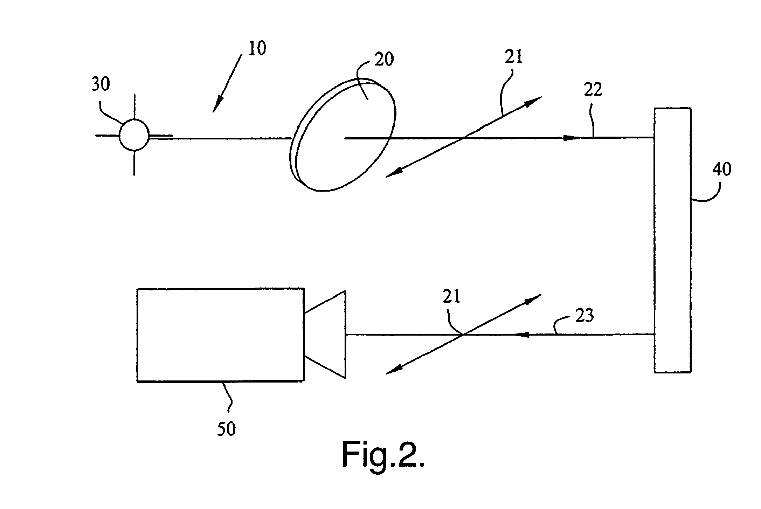

The use of the term "retroreflective" hereinafter refers to a characteristic of an object that allows the object to reflect incident light back to its source and to preserve the polarization state of the incident light. This concept is exhibited in Fig. 2. Light source 30 emits light 10 towards retroreflective object 40. Polarizer 20 polarizes light 10 and transmits polarized light component 22 having polarization orientation 21. Because of its retroreflective properties, object 40 reflects light component 22, and reflected light component 23 has the same polarization orientation 21 as light component 22. Retroreflective object 40 may be a road sign, a license plate, or other object.

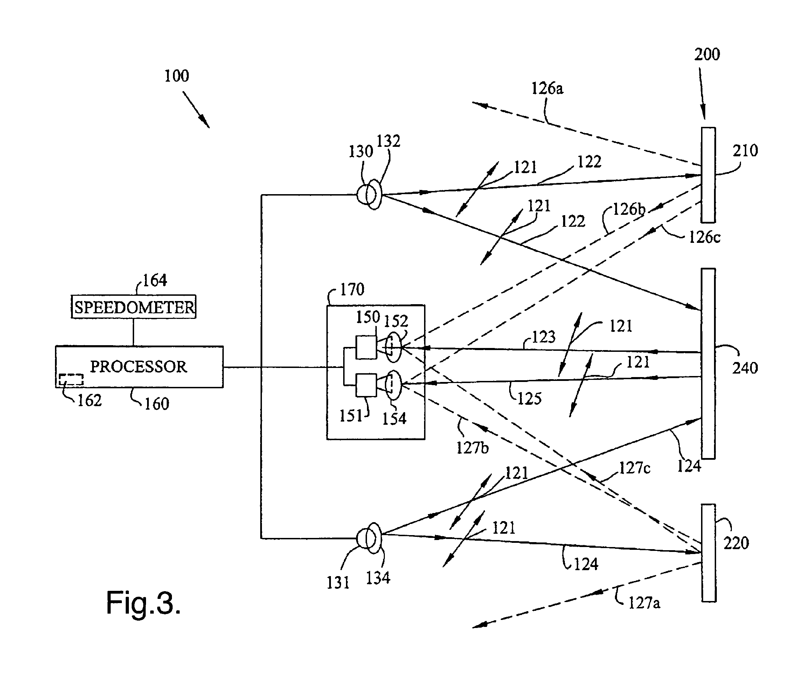

A first embodiment of the object identification system of the present invention is shown in Fig. 3 and utilizes the concept described above. Object identification system 100 is designed for use in an automotive vehicle and includes at least one processor 160 having memory 162. In an exemplary embodiment of the present invention, the vehicle's headlights serve as light sources 130, 131. In other embodiments of object identification system 100, one or more light sources separate from the headlights may be installed in the vehicle. Image sensors 150, 151 suitable for use in object identification system 100 may include, for example, charge-coupled device image sensors and complimentary metal-oxide semi-conductor image sensors. Image sensors 150, 151 may also be positioned in a common housing 170.

Linear polarizing filters 132, 134 ("illumination polarizers") are attached to light sources 130, 131, respectively, either formed in the transparent covers of light sources 130, 131 or added to the transparent covers, and illumination polarizers 132, 134 have the same polarization (e.g., phase = 0 degrees, 45 degrees, 90 degrees, etc.). Polarizers 132, 134 may also be integrated with light sources 130, 131. Other light sources, for example lasers, can emit polarized light without the use of polarizers 132, 134.

Linear polarizing filters 152, 154 ("sensor polarizers") are respectively attached to image sensors 150, 151. Other embodiments of object identification system 100 may include three or more image sensors and corresponding sensor polarizers. Sensor polarizers 152, 154 pass the component of light with polarization along their orientations to image sensors 150, 151, and image sensors 150, 151 detect the brightness of the polarized light components.

One of sensor polarizers 152, 154 has the same polarization as illumination polarizers 130, 131. For example, if illumination polarizers 132, 134 have a zero (0) degree polarization, then either sensor polarizer 152 or sensor polarizer 154 has a zero (0) degree polarization. The other of sensor polarizers 152, 154 has a polarization orthogonal (i.e., 90 degree difference) to the polarization of illumination polarizers 132, 134. Returning to the above example, if illumination polarizers 132, 134 and, consequently, sensor polarizer 152 have a zero (0) degree polarization, then sensor polarizer 154 has a ninety (90) degree polarization.

The operation of object identification system 100 is now explained with reference to Fig. 3. Light sources 130, 131 emit incident light 122, 124 towards traffic scene 200. Illumination polarizers 132, 134 of light sources 130, 131 polarize incident light 122, 124 in orientation 121 of respective illumination polarizers 132, 134. For purposes of this explanation, it will be assumed that illumination polarizers 132, 134 have a zero (0) degree polarization. Sensor polarizer 152 has a corresponding zero (0) degree polarization, and sensor polarizer 154 has a ninety (90) degree polarization.

Traffic scene 200 includes various objects, including objects 210, 220, 240. Objects 210, 220 are non-retroreflective and may include stationary and/or mobile objects found at any typical traffic scene, for example, vehicles, trees, pedestrians, light poles, telephone polls, buildings, etc. Objects 210, 220 reflect unpolarized light illustrated by reflected light 126a, 126b, 126c, 127a, 127b, 127c (represented as dashed lines) in Fig. 3. Reflected light 126a, 126b, 126c, 127a, 127b, 127c has polarization components with various orientations including the same polarization orientation as polarized incident light components 122, 124.

Object 240 is retroreflective, thereby maintaining the polarization orientation of incident light 122, 124 and reflecting light 123, 125 back to their respective sources. Accordingly, light 123 reflected from object 240 has the same polarization orientation 121 as polarized incident light 122, and reflected light 125 has the same polarization orientation 121 as polarized incident light 124. Sensor polarizer 152 enables reflected light 123 to pass to image sensor 152 because illumination polarizers 132, 134 and sensor polarizer 152 have zero (0) degree polarization orientations. The intensity of reflected light 123 captured by image sensor 150 is greater than the intensity of reflected light 125 captured by image sensor 151 because sensor polarizer 154 has a ninety (90) degree polarization. The orthogonal relationship between sensor polarizer 152 and sensor polarizer 154 provides the maximum discrimination because when light is polarized in a certain direction, there is minimum reflection in the orthogonal direction.

After respective image sensors 150, 151 detect reflected light 123, 125, 126b, 126c, 127b, 127c, each of image sensors 150, 151 create an image of scene 200 using known imaging techniques. Using the phase and partial polarization equations detailed above, processor 160 calculates the phase and partial polarizations of reflected light 123, 125 on a pixel by pixel basis. More specifically, processor 160 aligns the two images and calculates the phase and partial polarization for each of the corresponding pixel elements. Processor 160 then uses known image processing segmentation techniques (e.g., thresholding, edge-finding, blob analysis, etc.) to extract regions of pixels that correspond to predetermined phase and partial polarization requirements.

The detection step is followed by the recognition step. After extracting the regions, processor 160 compares the extracted regions against predetermined features of the object that system 100 is being used to identify. Such features may include minimum-maximum size, shape and aspect ratio. If object 240 is determined to be within the tolerance levels of the predefined features, then object 240 is detected as being a strong candidate for the object that system 100 is being used to identify. While this embodiment describes the use of two images sensors 150, 151 and two corresponding sensor polarizers 152, 154, other embodiments of the present invention may include three image sensors and three sensor polarizers.

In an exemplary embodiment of the present invention, object 240 is a traffic road sign. Road signs are typically coated with known retroreflective materials such as paint or tape. In other embodiments of the invention, object 240 includes any retroreflective object found in a traffic scene, for example, markers on side guard rails, lane markings such as "bots dots" or "cat eyes," and construction barrels and barricades.

A specific example of how object identification system 100 may be used is in a vehicle to detect and read a retroreflective speed limit sign. As described above, system 100 first uses polarization sensing to detect the speed limit sign in a traffic scene. Processor 160 compares the features of the detected speed limit sign to those of standard speed limit signs and filters out regions not containing the predetermined features of standard speed limit signs. Processor 160 next executes software that instructs processor 160 to use an OCR technique to read the text string(s) on the speed limit sign, to extract numerals read in the text string, and to determine the speed limit on the speed limit sign. Example OCR techniques suitable for use with the present invention include, but are not limited to, spatial template matching, contour detection, neural networks, fuzzy logic and Fourier transforms. Processor 160 may then compare the speed on the speed limit sign to the speed taken from speedometer 164 of the vehicle and generate a warning to the vehicle's driver if the speed of the vehicle is exceeding the speed limit.

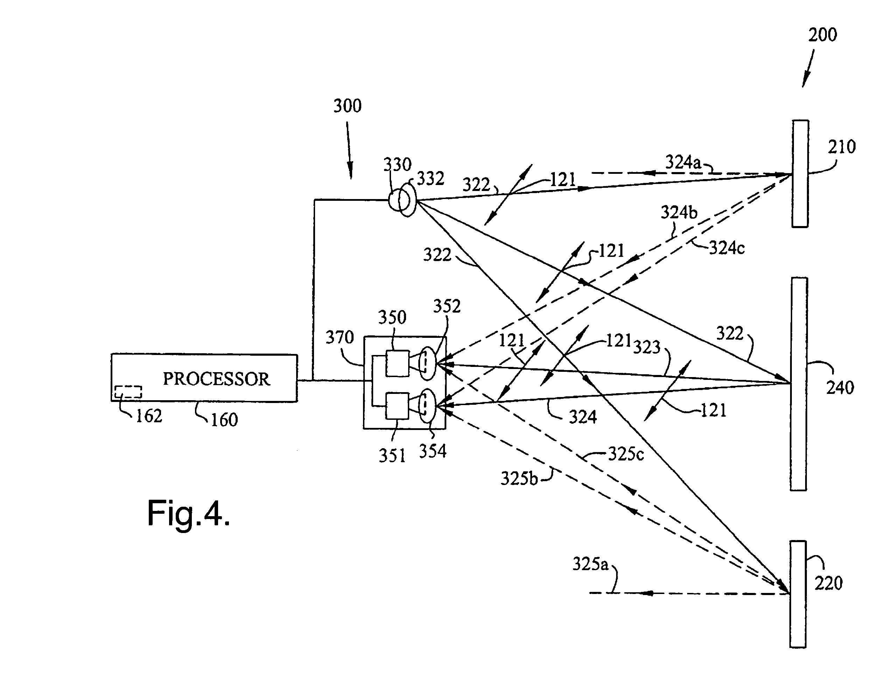

Additional embodiments of the object identification system are shown in Figs. 4-7. As mentioned herein, in an exemplary embodiment of the object identification system, the headlamps of a vehicle serve as light sources for the system. In Fig. 4, however, object identification system 300 includes single light source 330. Light source 330 may be either a broad band or a narrow band light source.

In object identification system 300, one of sensor polarizers 352, 354 has the same polarization orientation as illumination polarizer 332. The other of sensor polarizers 352, 354 has a polarization orientation orthogonal to the polarization of illumination polarizer 332 so as to provide the maximum discrimination between reflected light 323 passed through sensor polarizer 352 and captured by image sensor 350, and reflected light 324 passed through sensor polarizer 354 and captured by image sensor 351. Image sensors 350, 351 may share housing 370.

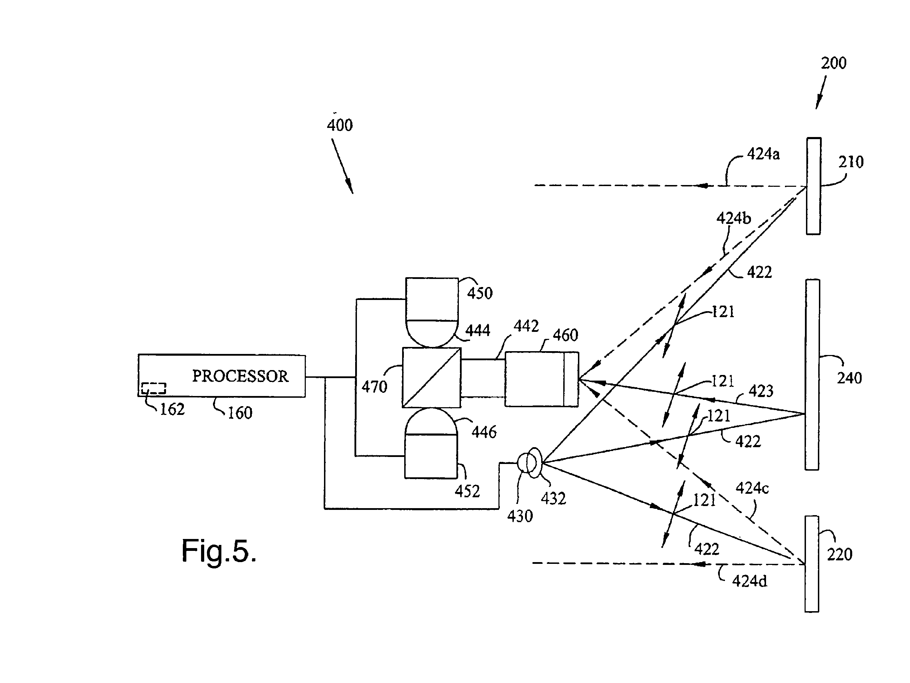

As shown in Fig. 5, object identification system 400 includes polarizing beam splitter 470. Beam splitter 470 is coupled to image sensors 450, 452. Lens 460 is also connected to beam splitter 470. For purposes of the following example, it is assumed that illumination polarizer 432 has a polarization of 0 degrees.

Light source 430 emits incident light 422 polarized by illumination polarizer 432 and having orientation 121 toward traffic scene 200, and retroreflective object 240 reflects light 423 having the same polarization orientation 121 back in the direction of light source 430. Lens 460 captures reflected light 423. Upon zoom lens 460 capturing reflected light 423, beam splitter 470 passes reflected light 423 having 0 degrees polarization to image sensor 452 and passes reflected light 423 having 90 degree polarization to image sensor 450. Therefore, the maximum discrimination is again provided between reflected light 423 passed through beam splitter 470 and detected by image sensor 452 and reflected light 423 passed through beam splitter 470 and detected by image sensor 450. Each of image sensors 450, 452 then creates an image of scene 200 using known imaging techniques, and processor 160 calculates the phase and partial polarization of reflected light 423 on a pixel by pixel basis as described above.

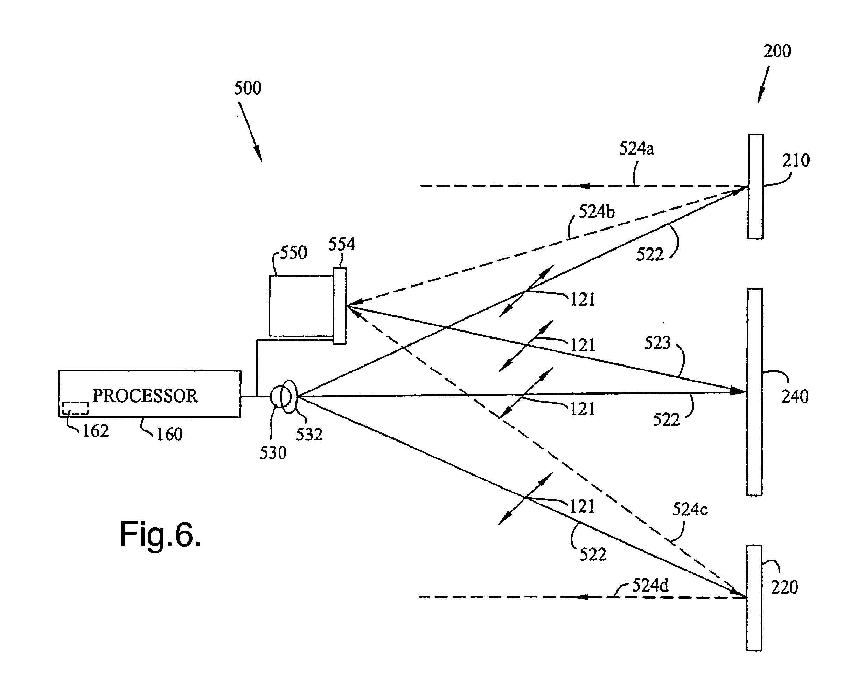

In another embodiment of the invention shown in Fig. 6, object identification system 500 includes image sensor 550 in electronic communication with LCD 554. Image sensor 550 and LCD 554 are coupled to processor 160. In this embodiment, processor 160 is programmed to control LCD 554 so that LCD 554 electronically rotates multiple polarizations. For example, processor 160 may send a first signal to LCD 554 with instructions to allow reflected light 523 having theta polarization orientation to pass through LCD 554. Reflected light 523 is then detected by image sensor 550. Processor 160 may send a second signal to LCD 554 instructing LCD 554 to enable reflected light 523 having theta + 90 polarization orientation to pass through and be captured by image sensor 550. The theta and theta + 90 degree polarizations are then used by processor 160 to calculate the phase and partial polarization as has been described herein. Object identification system 500 is advantageous because it requires only a single image sensor 550 and no mechanical parts, but the two polarizations are detected at two different points in time. Since two images are acquired by image sensor 550 at different instances of time, a very high frame rate is required for image sensor 550 and LCD 554 to avoid motion artifacts. The use of such a system depends on the availability of illumination levels that allow the capture of two sequential images with adequate contrast in a relatively short period during which the motion of objects in scene 200 is slower than the configuration time of LCD 554 and the capture time of two images using the image sensor 550.

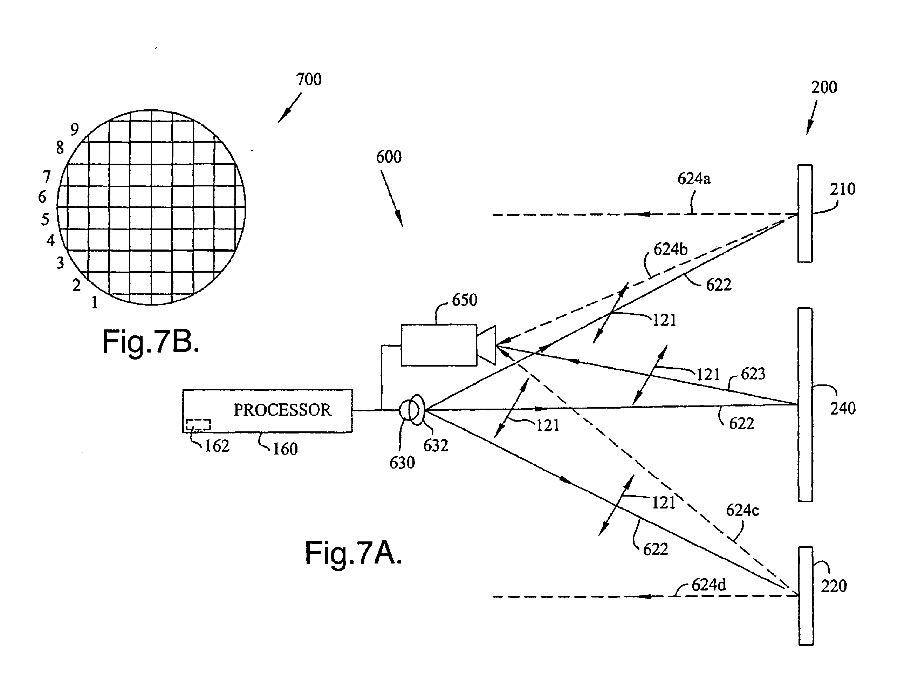

Another embodiment of the object identification system of the present invention also uses a single image sensor. Shown in Fig. 7A, object identification system 600 includes light source 630 and image sensor 650 coupled to processor 160. Whereas other embodiments have described sensor polarizers externally connected to the image sensor, in object identification system 600, the functionality of a sensor polarizer is integrated within image sensor 650. Image sensor 650 includes a number of pixel sensors 700 (e.g. 512x512) illustrated in Fig. 7B. One-half of the pixel sensors 700, e.g., rows 1, 3, 5, 7 and 9 are coated such they detect reflected light having theta polarization and the other half of pixels 700, i.e., rows 2, 4, 6 and 8 are coated to detect reflected light having theta + 90 degree polarization. Processor 160 then uses the theta and theta + 90 degree polarizations to calculate the phase and partial polarization.

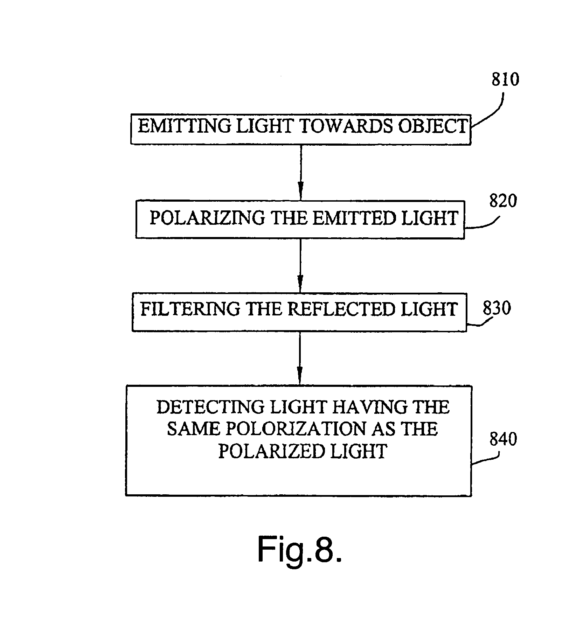

The steps performed by the multiple embodiments of the inventive object identification system are shown in Fig. 8. The steps include emitting light towards an object (810), polarizing the emitted light (820), filtering the reflected light (830), and detecting light having a polarization the same as the polarized emitted light (840).

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. An object identification system (100, 300, 400, 500, 600) comprising:

   at least one processor (160);
   a light source (130, 131, 330, 430, 530, 630) coupled to said at least one processor and configured to emit light (122, 124, 322, 422, 522, 622) towards a retroreflective object (240) and a non-retroreflective object (210, 220);
   a first sensor (151, 351) coupled to said at least one processor, said first sensor configured to detect light having a first polarization orientation; and
   a second sensor (150, 350) coupled to said at least one processor, said second sensor configured to detect light having a second polarization orientation substantially orthogonal to the first polarization orientation.

2. The object identification system of claim 1 wherein said light source includes a light source polarizing means (132, 134, 332, 432, 532, 632) configured to polarize the emitted light in the first polarization orientation.

3. The object identification system of claim 2 further comprising a first sensor filter means (154, 354) attached to said first sensor and configured to filter light having the first polarization orientation to said first sensor.

4. The object identification system of claim 2 further comprising a second sensor filter means (152, 352) attached to said second sensor and configured to filter light having the second polarization orientation to said second sensor.

5. The object identification system of claim 1 wherein said first sensor detects a first image and said second sensor detects a second image, the first and second images having corresponding pixels that form regions when aligned.

6. The object identification system of claim 5 wherein said at least one processor is adapted to align the first and second images and to calculate a phase and a partial polarization for each of the corresponding pixels.

**7.** The object identification system of claim 6 wherein said at least one processor is operable to perform at least one image extraction technique to extract the regions having a predetermined phase and a predetermined partial polarization.

**8.** An object identification system (100, 300, 400, 500, 600) comprising:

at least one processor (160);
a light source (130, 131, 330, 430, 530, 630) coupled to said at least one processor, said light source configured to emit light (122, 124, 322, 422, 522, 622) towards a retroreflective object (240) and a non-retroreflective object (210, 220);
a sensor (550, 650) coupled to said at least one processor, said sensor configured to detect light reflected by the retroreflective object and light reflected by the non-retroreflective object.

**9.** The object identification system of claim 8 wherein said light source includes a light source polarizing means (132, 134, 332, 432, 532, 632) configured to polarize the emitted light in a first polarization orientation.

**10.** The object identification system of claim 9 wherein said sensor is adapted to recognize a plurality of pixels.

**11.** The object identification system of claim 10 wherein said sensor includes pixel sensors (700) configured to detect light having the first polarization orientation and light having a second polarization orientation substantially orthogonal to the first polarization.

**12.** The object identification system of claim 11 wherein said pixel sensors includes a first set of pixel sensors configured to detect light having the first polarization orientation and a second set of pixel sensors configured to detect light having the second polarization orientation.

**13.** A method of detecting an object comprising the steps of:

emitting (810) polarized light towards a retroreflective object and a non-retroreflective object;
filtering (830) light reflected by the retroreflective object and the non-retroreflective object; and
detecting (840) the reflected light having the same polarization orientation as the emitted light.

**14.** The method of claim 13 wherein the step of emitting includes a step of utilizing a polarizer having a first orientation to polarize the emitted light.

**15.** The method of claim 14 wherein the step of filtering includes a step of utilizing a first filter having the first orientation to filter the light reflected by the retroreflective object.

**16.** The method of claim 13 wherein the step of filtering includes a step of utilizing a second filter having a second orientation substantially orthogonal to the first orientation to filter the light reflected by the non-retroreflective object.

**17.** The method of claim 14 further comprising steps of

forming a first image and a second image, the first and second images having corresponding pixels that form regions when aligned; and
calculating a phase and a partial polarization for each of the corresponding pixels.

**18.** An object identification system (100, 300, 400, 500, 600) comprising:

at least one processor (160);
a light source (130, 131, 330, 430, 530, 630) coupled to said at least one processor and configured to emit light (122, 124, 322, 422, 522, 622) towards a retroreflective object (240) and a non-retroreflective object (210, 220);
a light detection device (460) coupled to said at least one processor, said light detection device including a light splitting means (470) configured to divide light having a first polarization orientation from light having a second polarization orientation substantially orthogonal to the first polarization orientation; and
a first sensor (450) and a second sensor (452) coupled to said light splitting means, said first sensor configured to detect light having the first polarization orientation and said second sensor configured to detect light having the second polarization orientation.

**19.** The object identification system of claim 18 wherein said light source includes light source polarizing means (132, 134, 332, 432, 532, 632) configured to polarize the emitted light in the first polarization orientation.

**20.** In a traffic environment containing a non-retroreflective object (210, 220) and a retroreflective object (240) containing text, an object identification system (100, 300, 400, 500, 600) for use in a vehicle, the system comprising:

a light source (130, 131, 330, 430, 530, 630) configured to emit light (122, 124, 322, 422, 522, 622) towards the retroreflective object and the non-retroreflective object, said light source including polarizing means (132, 134, 332, 432, 532, 632) configured to polarize the emitted light in a first polarization orientation;

a first sensor (151, 351) including a first sensor filter means(154, 354) configured to filter to said first sensor light having the first polarization orientation;

a second sensor (150, 350) including a second sensor filter means (152, 352) configured to filter to said second sensor light having a second polarization orientation substantially orthogonal to the first polarization orientation; and

at least one processor (160) coupled to each of said light source, said first sensor and said second sensor, said at least one processor including memory (162) storing software capable of being executed by said at least one processor to carry out the steps of:

instructing said first sensor to detect a first image and said second sensor to detect a second image, the first and second images having corresponding pixels that form regions when aligned;

performing at least one image extraction technique to extract the regions having a predetermined phase and partial polarization;

comparing the extracted regions to known characteristics of retroreflective objects; and

performing at least one image processing technique to read text on the retroreflective object.

**21.** The object identification system of claim 20 further comprising a speedometer (164) coupled to said at least one processor and configured to provide the vehicle's speed to said at least one processor.

**22.** The object identification system of claim 21 wherein said at least one processor includes memory storing software capable of being executed by said at least one processor to carry out the step of comparing the vehicle's speed to the text read on the retroreflective object.

**23.** The object identification system of claim 22 wherein said at least one processor includes memory storing software capable of being executed by said at least one processor to carry out the step of generating a warning signal if said at least one processor determines that the vehicle's speed is greater than the text read on the retroreflective object.

Fig.1.

Fig.2.

Fig.3.

EP 1 798 667 A2

Fig.4.

Fig.5.

Fig.6.

EP 1 798 667 A2

Fig.7B.

Fig.7A.

EP 1 798 667 A2

EP 1 798 667 A2

```
                              ┌─────────────────────────────┐  810
                              │ EMITTING LIGHT TOWARDS OBJECT│
                              └─────────────────────────────┘
                                            │
                                            ▼
                              ┌─────────────────────────────┐  820
                              │  POLARIZING THE EMITTED LIGHT│
                              └─────────────────────────────┘
                                            │
                                            ▼
                              ┌─────────────────────────────┐  830
                              │ FILTERING THE REFLECTED LIGHT│
                              └─────────────────────────────┘
                                            │
                                            ▼
                              ┌─────────────────────────────┐
                              │   DETECTING LIGHT HAVING THE │
                              │    SAME POLORIZATION AS THE  │  840
                              │       POLARIZED LIGHT        │
                              └─────────────────────────────┘
```

# Fig.8.